# EUROPÄISCHE PATENTSCHRIFT

(11) **EP 1 431 668 B1**
(45) Veröffentlichungstag und Bekanntmachung des Hinweises auf die Patenterteilung: **17.10.2018**
(21) Anmeldenummer: 03027821.2
(22) Anmeldetag: 03.12.2003
(51) Int. Cl.: F24C 7/08, G05B 19/10

(54) **KOCHGERÄT MIT EINER STEUERUNGSVORRICHTUNG**
COOKING APPARATUS WITH A CONTROL DEVICE
APPAREIL DE CUISSON AVEC DISPOSITIF DE CONTRÔLE

(30) Priorität: 20.12.2002 DE 10260146; 27.02.2003 DE 10308589
(43) Veröffentlichungstag der Anmeldung: 23.06.2004
(73) Patentinhaber: BSH Hausgeräte GmbH, 81739 München (DE)
(72) Erfinder: Haberkamm, Ramona, 83301 Traunreut (DE); Keller, Martin, 83301 Traunreut (DE); Plankl, Manfred, 83301 Traunreut (DE); Ulmer, Michael, 83301 Traunreut (DE)

(56) Entgegenhaltungen:
- EP-A2- 0 032 558
- DE-A1- 10 128 370

## Beschreibung

Die Erfindung betrifft ein Gargerät mit den im Oberbegriff des Patentanspruchs 1 genannten Merkmalen.

Elektrische Geräte, insbesondere Hausgeräte, weisen meist eine elektronische Steuerung bzw. Regelung mit einer Reihe von Regelparametern auf. Die Regelparameter sind oftmals als Reglerkennlinien in nicht-flüchtigen Speicherschaltungen abgelegt. Die DE 197 13 315 C2 beschreibt eine Schaltung zur Zuordnung von Leistungssteuersignalen zu Kochstellen eines Gargeräts. Die Steuerschaltung umfasst eine Ansteuerelektronik. Die Zuordnung der Leistungssteuersignale zumindest zu einer der Kochstellen ist variabel und erfolgt durch eine Logik. In einem elektronischen Speicher sind mögliche Zuordnungen von Steuersignalen zu Kochstellen unter bestimmten Adressen abgelegt, und die gewünschte Zuordnung ist durch Anwahl einer dieser Adressen auswählbar.

Die DE 296 05 567 U1 beschreibt eine Vorrichtung zur elektronischen Steuerung von Kochstellen bzw. Garöfen, Grills oder dergleichen. Die Steuerung weist ein EEPROM mit gespeicherten zeit- und/oder temperaturabhängigen Kennlinien und/oder Taktzeiten auf. Es sind weiterhin nicht-flüchtige Speichermittel zur Speicherung von zusätzlichen, gegenüber den im EEPROM gespeicherten, veränderten Einstellungen zur Steuerung vorgesehen. Dies können beispielsweise veränderte Kennlinien und/oder Taktzeiten gegenüber den im EEPROM gespeicherten, festen Kennlinien und Taktzeiten sein.

Bei der Regelung von elektrischen Geräten wie Hausgeräten ist ein hohes Maß an Regel- und Steuergenauigkeit gewünscht. Das gilt auch für Geräte, die vom Kunden durch Nachrüstung von Komponenten in ihrer Regelstrecke verändert werden können. Ein Beispiel hierfür sind nachträglich im Backofen montierte Katalysebleche oder Gargutträger- Auszugssysteme, die vom Kunden selbst im Backrohr befestigt werden können.

Aus der EP 0 032 558 A2 ist eine Steuervorrichtung zum Steuern und/oder Regeln von Maschinen bekannt. Abhängig von der Bestückung der Maschine mit einem spezifischen Temperatursensortyp, kann abgestimmt auf diesen Typ die Steuerung und/oder Regelung angepasst werden.

Darüber hinaus ist eine Vorrichtung gemäß dem Oberbegriff des Anspruchs 1 aus der DE 101 28 370 A1 bekannt. DE 101 28 370 A1 beschreibt ein Gargerät mit einem Kühllüfter.

Die Steuerung des Kühllüfters ist abhängig von Betriebsprogrammen von Heizeinheiten des Gargeräts und kann abhängig von weiteren physikalischen Parametern wie der Umgebungstemperatur etc. verändert werden.

Der vorliegenden Erfindung liegt die Aufgabe zugrunde, eine möglichst genaue Steuerung und/oder Regelung für elektrische Geräte zu ermöglichen, die auch nachträgliche Veränderungen am Gerät berücksichtigen kann.

Diese Aufgabe wird bei einem gattungsgemäßen Gargerät durch die kennzeichnenden Merkmale des Patentanspruchs 1 gelöst. Bevorzugte Weiterbildungen sind in den abhängigen Ansprüchen angegeben.

Erfindungsgemäß sind bei einem Gargerät mit einer Vorrichtung zur Steuerung des Gargeräts in einer Speicherschaltung des Gargeräts wenigstens zwei unterschiedliche Sätze von Kennlinien abgelegt, die jeweils unterschiedlichen Ausrüstungszuständen betreffend die Nachrüstung bzw. den Umbau von Komponenten des Gargeräts zugeordnet sind. Hierdurch kann auf eine Nachrüstung bzw. einen Umbau des elektrischen Geräts dadurch reagiert werden, dass für jede unterschiedliche Ausbaustufe jeweils unterschiedliche Kennliniensätze in der elektronischen Steuerung bzw. Regelung verwendet werden. Da eine Reglerkennlinie durch eine Nachrüstung, beispielsweise eines Backofens mit Katalyseblechen, einige Kelvin ihrer Genauigkeit verliert, kann dieser Nachrüstung durch eine Anpassung bzw. durch die Auswahl einer zweiten Reglerkennlinie Rechnung getragen werden.

Ein derartiger Einfluss von nachgerüsteten Katalyseblechen macht sich bei einer Ofenmuffel eines Gargeräts insbesondere dadurch bemerkbar, dass nach dem Einschalten der Heizung zunächst die Aufheizdauer bis zur Erreichung der gewünschten Betriebstemperatur länger wird. Nach dem Erreichen der Betriebstemperatur wird die Temperaturregelung träger, so dass eine verzögerte Reaktion der Temperaturänderung in der Ofenmuffel auf Veränderungen der Heizleistung erfolgt. Dieses verzögerte Ansprechverhalten kann zu unerwünschten Schwingungseffekten führen, so dass die tatsächliche Temperatur in der Ofenmuffel eine relativ ausgeprägte Schwankung um die eingestellte Gartemperatur zeigt. Diese beschriebenen Effekte können durch eine Anpassung der Regelungsparameter und -kennlinien vermieden werden. Eine trägere Regelungscharakteristik kann dafür sorgen, dass die voreingestellte Gartemperatur mit relativ geringer Schwankungsbreite beibehalten wird.

Bei der Umrüstung des elektrischen Geräts kann die Umschaltung zwischen den Kennliniensätzen entweder automatisch oder auf manuellem Wege erfolgen. Eine automatische Umschaltung kann insbesondere durch Betätigung eines Kontaktschalters oder eines kontaktlosen Auslöseschalters, beispielsweise einer Induktionsschleife, eines Magnetschalters oder dergleichen, ausgelöst werden. Bei einer manuellen Umschaltung ist vorzugsweise eine menügeführte Umschaltung mittels eines Bedien- und Anzeigenfeldes vorgesehen. Insbesondere kann eine Umschaltung zwischen den Kennliniensätzen durch eine Eingabekombination am Bedienfeld ermöglicht werden. Die Umschaltung kann beispielsweise dergestalt ermöglicht werden, dass ein Kunde mit dem Nachrüstsatz eine Ergänzung zur Bedienungsanleitung des Geräts erhält. Darin wird ein versteckter Einstieg zur Umschaltung der Reglerparameter beschrieben. Dieser Einstieg kann beispielsweise durch Einstellen einer Heizart mit Temperatur und anschließendem langen Drücken einer Taste, die in dieser Situation keine Funktion hat, geschehen. Anschließend sieht der Kunde den aktuellen Zustand der Kennlinienparameterauswahl, zum Beispiel durch eine Textdarstellung in einem Klartext oder einem Grafikdisplay. Bei Geräten ohne Textanzeige ist auch die Anzeige eines Codes in einer 7-Segmentanzeige einer Uhr oder Temperaturanzeige möglich. Durch Drehen eines Schalters oder Drücken einer Taste kann die Auswahl in der Anzeige verändert werden. Nach Drücken einer anderen Taste oder auch durch sofortige Übernahme wird diese Darstellung als neuer Zustand gespeichert. Das elektrische Gerät verwendet nun die Regelparameter zur Regelung im nachgerüsteten Zustand. Falls dieser Zustand zurückgerüstet wird, kann der Kunde in der gleichen Weise die Auswahl der Regelparameter zurücksetzen. Eine automatische Umschaltung kann insbesondere durch einen Kontaktschalter erfolgen, der durch die nachgerüsteten Einbauten betätigt wird. Dieser Schaltkontakt wird von den elektronischen Steuerung des elektrischen Geräts überwacht und die Kennlinie wird entsprechend des Schaltkontakts ausgewählt. Anstatt eines Kontaktschalters kann die automatische Umschaltung auch mittels eines Induktions- oder Magnetschalters, ggf. auch mittels eines optischen Sensors erfolgen.

Insbesondere ist die Auswahl von wenigstens zwei Kennlinienfeldern für ein Gargerät sinnvoll, das beispielsweise mit Katalyseblechen oder dergleichen nachgerüstet werden kann. Die Kennlinien sind in diesem Fall Teil einer elektronischen Steuerung einer Ofenmuffel. Die Katalysebleche werden zumindest an beiden Seiten einer Ofenmuffel montiert und beeinflussen aufgrund ihrer Materialstärke die Aufheizbedingungen im Backrohr. Gleichzeitig verändern sich auch die Regelkennlinien bei einer Temperaturregelung.

Durch Auswahl eines alternativen Kennliniensatzes, der auf das Vorhandensein der zusätzlichen Katalysebleche abgestimmt ist, können deren Einflüsse ausgeglichen werden.

Weitere Merkmale und Vorteile der vorliegenden Erfindung ergeben sich aus den abhängigen Ansprüchen und der nachfolgenden Figurenbeschreibung.

Die Erfindung wird nachfolgend anhand eines Ausführungsbeispiels unter Bezugnahme auf die beiliegenden Zeichnungen näher erläutert. Dabei zeigt:
- Figur 1: eine schematische Prinzipdarstellung eines elektrischen Geräts am Beispiel eines Gargeräts,
- Figur 2: eine schematische Schnittdarstellung eines Gargeräts mit einer nachrüstbaren Ofenmuffel,
- Figur 3: ein Zeit-Temperatur-Diagramm zur Veranschaulichung eines Temperaturregelungsverhaltens eines Gargeräts und
- Figur 4: ein Zeit-Temperatur-Diagramm zur Verdeutlichung eines modifizierten Regelungsverhaltens des Gargeräts.

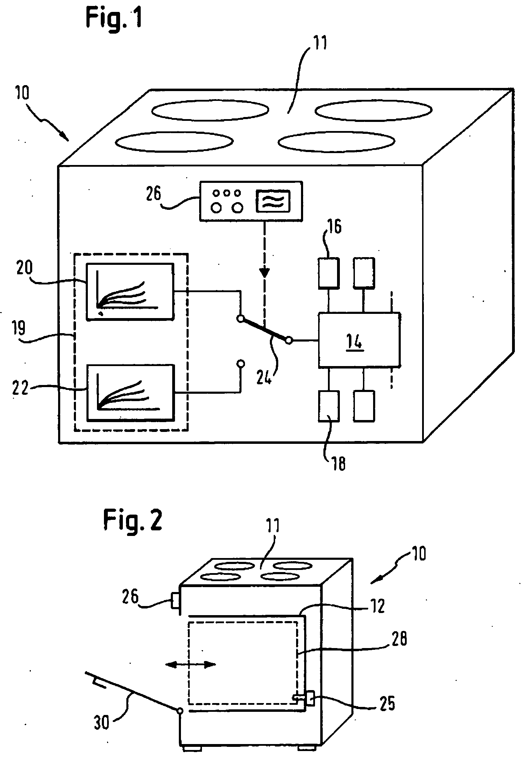

Figur 1 zeigt ein nachrüstbares elektrisches Gerät beziehungsweise ein Gargerät 10 in schematischer Darstellung. An einer Oberseite des Gargeräts 10 ist ein Kochfeld 11 angedeutet, während eine mit Katalyseblechen nachrüstbare Ofenmuffel in dieser Darstellung aus Gründen der Übersichtlichkeit nicht dargestellt ist. Der Betrieb der Ofenmuffel wird von einer Steuer- und Regeleinheit 14 überwacht und geregelt. Die Steuer- und Regeleinheit 14 weist Eingänge für eine Reihe von Sensoren 16 auf. Sensoren 16 können insbesondere als Temperatursensoren zur Erfassung einer Temperatur in der Ofenmuffel, als optische Sensoren zur Überwachung eines Garfortschritts oder dergleichen ausgestaltet sein können. Weiterhin weist die Steuer- und Regeleinheit 14 Steuerausgänge zur Ansteuerung wenigstens eines Aktors 18 auf. Ein Heizelement der Ofenmuffel bzw. des Kochfeldes 11 ist bspw. ein solcher Aktor 18.

Die Steuer- und Regeleinheit 14 greift während ihres Betriebs auf Speicherschaltung 19 mit einem ersten Kennlinienfeld 20 und einem zweiten Kennlinienfeld 22 zu, das gewünschte Kennlinienfeld über einen Umschalter 24 aktiviert oder deaktiviert werden kann. Der Umschalter 24 kann wahlweise durch eine Bedien- und Anzeigeneinheit 26 betätigt werden oder es kann eine automatische Umschaltung durch einen Auslöseschalter 25 (vgl. Figur 2) vorgesehen sein.

Figur 2 verdeutlicht eine nachrüstbare Ofenmuffel 12, in die bei geöffneter Frontklappe 30 bspw. Katalysebleche 28 nachgerüstet bzw. eingebaut werden können. Die Katalysebleche 28 werden typischerweise an den Seitenwänden der Ofenmuffel 12 montiert und dienen zur Unterstützung eines katalytischen Reinigungsbetriebs der Ofenmuffel 12. Bei Einbau eines solchen Katalysebleches 28 wird bei einer automatischen Umschaltung der Auslöseschalter 25 betätigt, der den Umschalter 24 betätigt, wodurch vom ersten Kennlinienfeld 20 auf das zweite Kennlinienfeld 22 umgeschaltet wird. Hierdurch wird der Tatsache Rechnung getragen, dass das Katalyseblech 28 die Heizelemente der Ofenmuffel 12 leicht abschirmt und so für eine Verschiebung der Regelkennlinie bei einem Garvorgang sorgt.

Die Umschaltung zwischen den Kennlinienfeldern 20 und 22 kann wahlweise auf manuelle Art mit Hilfe der Bedien- und Anzeigeneinheit 26 oder durch Betätigung eines von außen zugänglichen Auslöseschalters 25 erfolgen. In diesem Fall ist es zweckmäßig, den Auslöseschalter 25 mit einer gesonderten Sicherung zu versehen, damit die Umschaltung zwischen den beiden Kennlinienfeldern 20 und 22 nicht unbeabsichtigt erfolgt. Bei einer Umschaltung mittels der Bedien- und Anzeigeneinheit 26 ist es zweckmäßig, eine Codierung vorzusehen, die es dem Benutzer erlaubt, mit Hilfe einer vorgegebenen Tastenkombination eine Umschaltung vorzunehmen. Eine optische Quittierung am Gerät kann bspw. durch eine Textdarstellung in einem Display oder durch eine Ziffernanzeige einer Uhr oder Temperaturanzeige erfolgen.

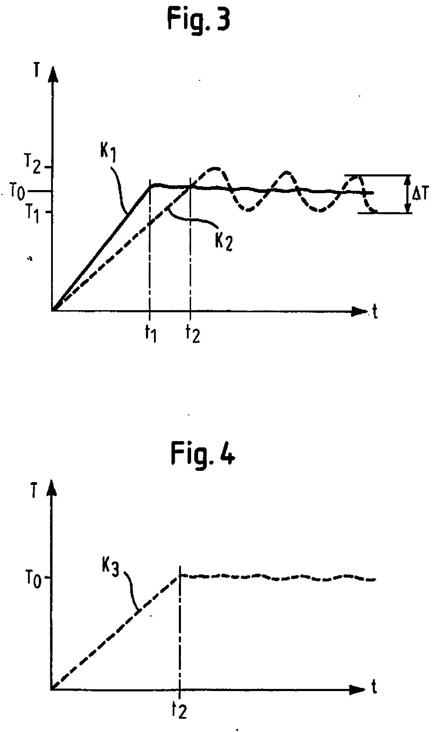

Anhand der qualitativen Diagramme der Figuren 3 und 4 sind in beispielhafter Form verschiedene Temperaturverläufe in einer Anheiz- und Betriebsphase des Gargeräts 10 verdeutlicht. Die Kurve K₁ der Figur 3 zeigt in der Anheizphase zunächst einen stetigen Temperaturanstieg, bis zum Zeitpunkt t₁ die gewünschte, voreingestellte Gartemperatur T₀ erreicht ist. Die Katalysebleche 28 sind hierbei nicht montiert. Die voreingestellten Regelungsparameter sorgen nach Erreichen der Gartemperatur T₀ für einen konstanten Temperaturverlauf während der gesamten Garzeit.

Die Kurve K₂ der Figur 3 verdeutlicht eine mögliche Veränderung des Regelverhaltens nach montierten Katalyseblechen 28. Hierbei ist die Zeitspanne bis zur Erreichung der voreingestellten Gartemperatur T₀ etwas länger als zuvor, da die Katalysebleche zusätzlich aufgeheizt werden müssen und die Ofenmuffel 12 gegen die Aufheizung durch die Heizelemente abschirmen. Nachdem zum späteren Zeitpunkt t₂ die gewünschte Gartemperatur T₀ erreicht ist, wird aufgrund der verzögerten Reaktion der Regelung bis auf die höhere Temperatur T₂ aufgeheizt. Anschließend schwankt die tatsächliche Temperatur in der Ofenmuffel 12 um die Schwankungsbreite ΔT zwischen der tieferen Temperatur T₁ und der höheren Temperatur T₂.

Erst die Umschaltung auf einen angepassten Satz von Regelparametern ermöglicht nach dem Nachrüsten der Katalysebleche 28 die gewünschte Konstanz der Gartemperatur. Dies ist durch die Kurve K₃ in Figur 4 verdeutlicht. Die Zeit t₂ bis zur Erreichung der gewünschten Gartemperatur T₀ bleibt hierbei unverändert. Die Schwankungsbreite der tatsächlichen Temperatur kann jedoch durch entsprechend angepasste Regelparameter, d.h., in diesem Fall durch eine verzögerte bzw. trägere Auslegung der Regelung, reduziert werden. Im Idealfall kann die Gartemperatur T₀ über die Zeit nahezu konstant gehalten werden.

Die vorliegende Erfindung ermöglicht es dem Kunden, die Regelung eines elektrischen Geräts, insbesondere eines Backofens nach dem Einfügen von bekannten zusätzlichen Komponenten auf speziell für diese Änderungen angepasste Regelparameter umzustellen. Damit wird eine hohe Regelgenauigkeit des Geräts über diese Veränderung und Nachrüstung hinaus sicher gestellt. Die Rückrüstbarkeit des Geräts kann ebenso problemlos berücksichtigt werden, indem auf den alten Kennliniensatz der Regelparameter zurückgeschaltet werden kann.

### Bezugszeichenliste

- 10: elektrisches Gerät / Gargerät
- 11: Kochfeld
- 12: Ofenmuffel
- 14: Steuer- und Regeleinheit
- 16: Sensor
- 18: Aktor
- 19: Speicherschaltung
- 20: erstes Kennlinienfeld
- 22: zweites Kennlinienfeld
- 24: Umschalter
- 25: Auslöseschalter
- 26: Bedien- und Anzeigeneinheit
- 28: Katalyseblech
- 30: Frontklappe

## Patentansprüche

1. Gargerät mit einer Vorrichtung zur Steuerung des Gargeräts, mit einer Speicherschaltung (19) und darin abgelegten, gerätespezifischen Steuer- und/oder Regelkennlinien, insbesondere mit zeit- und/oder temperaturabhängigen Kennlinien und/oder Taktzeiten, wobei die Speicherschaltung (19) wenigstens zwei unterschiedliche Sätze (20, 22) von Kennlinien aufweist, **dadurch gekennzeichnet, dass** die Sätze (20, 22) von Kennlinien jeweils unterschiedlichen Ausrüstungszuständen betreffend die Nachrüstung bzw. den Umbau von Komponenten des Gargeräts (10) zugeordnet sind.

2. Gargerät nach Anspruch 1, **gekennzeichnet durch** eine Einrichtung (24, 25) zum automatischen Umschalten zwischen den Kennliniensätzen (20, 22) bei einer Umrüstung des Gargeräts (10) vorgesehen ist.

3. Gargerät nach Anspruch 2, **dadurch gekennzeichnet, dass** die automatische Umschalteinrichtung einen Kontakt- oder Auslöseschalter (25) zum Auslösen des Umschaltvorgangs umfasst.

4. Grgerät nach Anspruch 3, **dadurch gekennzeichnet, dass** der Kontakt- oder Auslöseschalter (25) auf mechanischem, auf induktivem oder auf magnetischem Wege auslösbar ist.

5. Gargerät nach Anspruch 1, **gekennzeichnet durch** eine Einrichtung (24, 26) zum manuellen Umschalten zwischen den Kennliniensätzen (20, 22) bei einer Umrüstung des Gargeräts (10) vorgesehen ist.

6. Gargerät nach Anspruch 5, **dadurch gekennzeichnet, dass** die manuelle Umschalteinrichtung eine Bedien- und Anzeigeneinheit (26) zum menugeführten Umschalten aufweist.

7. Gargerät nach Anspruch 6, **dadurch gekennzeichnet, dass** ein Umschalten durch eine Eingabekombination an der Bedien- und Anzeigeneinheit (26) auslösbar ist.

8. Gargerät nach einem der Ansprüche 1 bis 7, **dadurch gekennzeichnet, dass** es (10) ein Gargerät mit einer Ofenmuffel (12) ist, in die Katalysebleche (28) oder Gargutträger- Auszugssysteme als unterschiedliche Ausbaustufen nachreichbar sind.

## Claims

1. Cooking appliance having a device for controlling the cooking appliance, having a memory circuit (19) and appliance-specific control and/or regulating characteristic curves stored therein, in particular with time and/or temperature-dependent characteristic curves and/or clock cycles, wherein the memory circuit (19) has at least two different sets (20, 22) of characteristic curves, **characterised in that** the sets (20, 22) of characteristic curves are each assigned to different equipment states relating to the retrofitting or modification of components of the cooking appliance (10).

2. Cooking appliance according to claim 1, **characterised by** a facility (24, 25) being provided for automatically toggling between the characteristic curve sets (20, 22) when the cooking appliance (10) is refitted.

3. Cooking appliance according to claim 2, **characterised in that** the automatic toggling facility comprises a contact or trigger switch (25) for triggering the toggling process.

4. Cooking appliance according to claim 3, **characterised in that** the contact or trigger switch (25) can be triggered mechanically, inductively or magnetically.

5. Cooking appliance according to claim 1, **characterised by** a facility (24, 26) being provided for manually toggling between the characteristic curve sets (20, 22) when the cooking appliance (10) is refitted.

6. Cooking appliance according to claim 5, **characterised in that** the manual toggling facility has a control and display unit (26) for menu-based toggling.

7. Cooking appliance according to claim 6, **characterised in that** toggling can be triggered by an input combination on the control and display unit (26).

8. Cooking appliance according to one of claims 1 to 7, **characterised in that** it (10) is a cooking appliance with an oven muffle (12), into which catalytic plates (28) or food carrier pull-out systems can be added later as different stages of expansion.

## Revendications

1. Appareil de cuisson avec un dispositif de commande de l'appareil de cuisson, avec un circuit à mémoire (19) et des courbes de commande et/ou de régulation spécifiques à l'appareil y enregistrées, en particulier avec des courbes caractéristiques en fonction de la durée et/ou de la température et/ou des durées de cycle, dans lequel le circuit à mémoire (19) présente au moins deux ensembles différents (20, 22) de courbes caractéristiques, **caractérisé en ce que** des états d'équipement différents respectifs concernant l'équipement resp. la transformation de composants de l'appareil de cuisson (10) sont affectés aux ensembles (20, 22) de courbes caractéristiques.

2. Appareil de cuisson selon la revendication 1, **caractérisé par** un dispositif (24, 25) pour la commutation automatique entre les ensembles de courbes caractéristiques (20, 22) lors d'une adaptation de l'appareil de cuisson (10).

3. Appareil de cuisson selon la revendication 2, **caractérisé en ce que** le dispositif de commutation automatique englobe un contacteur ou un déclencheur (25) pour le déclenchement du processus de commutation.

4. Appareil de cuisson selon la revendication 3, **caractérisé en ce que** le contacteur ou déclencheur (25) peut être déclenché par voie mécanique, inductive ou magnétique.

5. Appareil de cuisson selon la revendication 1, **caractérisé par** un dispositif (24, 26) pour la commutation manuelle entre les ensembles de courbes caractéristiques (20, 22) lors d'une adaptation de l'appareil de cuisson (10).

6. Appareil de cuisson selon la revendication 5, **caractérisé en ce que** le dispositif de commutation manuelle présente une unité de commande et d'affichage (26) pour la commutation guidée par menu.

7. Appareil de cuisson selon la revendication 6, **caractérisé en ce qu'**une commutation peut être déclenchée par une combinaison de saisies sur l'unité de commande et d'affichage (26).

8. Appareil de cuisson selon l'une des revendications 1 à 7, **caractérisé en ce que** l'appareil de cuisson (10) est un appareil de cuisson avec un moufle de four (12) dans lequel des tôles catalytiques (28) ou un système extractible pour supports de denrées à cuire peut être adapté ultérieurement sous la forme de différents aménagements.
